# EUROPEAN PATENT SPECIFICATION

(11) **EP 1 431 723 B1**
(45) Date of publication and mention of the grant of the patent: **09.03.2016**
(21) Application number: 02445190.8
(22) Date of filing: 20.12.2002
(51) Int. Cl.: G01S 7/03, G01S 7/02, G01S 7/41, G01F 23/284, G01S 13/08, G01S 13/88

(54) **Method and apparatus for radar-based level gauging**
Auf Radar basierendes Verfahren und Vorrichtung zur Füllstandsmessung
Procédé et appareil pour mesurer le niveau par radar

(43) Date of publication of application: 23.06.2004
(73) Proprietor: Rosemount Tank Radar AB, 402 51 Göteborg (SE)
(72) Inventor: Edvardsson, Kurt Olov, 183 30 Täby (SE)
(74) Representative: Kransell & Wennborg KB

(56) References cited:
- DE-A- 3 210 400
- US-A- 5 420 591
- US-A- 5 543 720
- PATENT ABSTRACTS OF JAPAN vol. 013, no. 276 (P-890), 26 June 1989 (1989-06-26) & JP 01 065420 A (KOBE STEEL LTD), 10 March 1989 (1989-03-10)
- PATENT ABSTRACTS OF JAPAN vol. 2002, no. 12, 12 December 2002 (2002-12-12) & JP 2002 243845 A (SHINKO MEX CO LTD), 28 August 2002 (2002-08-28)

## Description

### FIELD OF THE INVENTION

The invention relates generally to level gauging, and more specifically the invention relates to a method and an apparatus for radar-based level gauging.

### BACKGROUND OF THE INVENTION AND RELATED ART

Radar-based methods are extensively used for level gauging, i.e. measuring a distance from the top of a tank to a surface of a liquid or some kind of granular solid stored in the tank, by means of transmitting microwaves towards the surface of the liquid or the granular solid, receiving the microwaves as reflected against the surface of the liquid or solid, i.e. the surface echo, and calculating the level of the liquid or solid in the tank from the propagation time of the transmitted and reflected microwaves.

One very general problem in this respect is that the tank includes typically various structures, such as beams, support beams, pipes, agitators, tank walls, etc. Such structures may also reflect microwaves, and such echoes can interfere with the microwaves reflected from the surface of the liquid or solid, the level of which being gauged. An interfering echo having a signal strength considerably lower than the signal strength of the surface echo will cause measuring errors if the structures creating the interfering echoes is close to, i.e. within a few tenths of a meter from, the surface. If the interfering echo is stronger than the echo from the surface the interfering echo may falsely be selected as the surface echo. Various echo logic methods have been applied to decrease this risk, but nevertheless this is a large problem in many tank environments.

The selection of correct microwaves is thus extremely important and any possibility of distinguishing microwave signals reflected from the surface of the liquid or solid from microwaves reflected from other structures is very useful.

Typically, prior art radar level gauges typically select the strongest echo.

The ideal case is to use an antenna with a rather narrow lobe located in the tank where no disturbing echoes are close to the antenna lobe. In this case the surface echo may be the strongest one even after some degradations due to turbulence, foam etc. For smaller tanks various tank structures may approach the antenna beam, not at least since the antenna has to be smaller. Furthermore when the echo from the surface is close to a disturbing echo there is a risk for a large measuring error.

In DE 3210400 the pulses radiated by the radar device are divided into groups having in each case N pulses and are circularly polarised. The frequency of the carrier oscillation changes within a pulse group by in each case the same amounts from pulse to pulse. In two receiving channels, signal components are processed which are allocated to a right-hand circularly polarised component and to a left-hand circularly polarised component of the received signal. In both receiving channels, the amplitudes of these signal components are measured and stored for all existing distance range zones. For each receiving channel, the fundamental, or the fundamentals, which or the sum of which produces the envelope for the N stored amplitude values of a zone range, is or are determined. By comparing this information found with the information stored for a particular target or for a target class, at least a target classification is produced in an evaluating device.

US 5543720 discloses a device for gauging the level of a fluid in a container. It comprises a transmitter for transmitting a polarizable microwave signal through a first waveguide section, a receiver for receiving a reflected microwave signal, an electronic unit for determining the reflex position of the reflected microwave signal and an antenna means with a second waveguide section. The device is primarily characterized in that the transmitter and receiver, respectively, transmits and receives a waveguide mode each, mutually orthogonal, and by an easily replaceable third waveguide section inserted between the first and second waveguide sections, provided with means for polarization and/ or damping for optimal adaptation of the device to various containers and antennae.

US 5420591 discloses a method for the discriminating of obstacles by means of a radar, and its different applications to the measurement of a liquid in a tank or vessel, or again to the elimination of unwanted or parasitic echos coming notably from the ground, for radars mounted on vehicles or controlling vehicle traffic. To implement the method, the obstacle to be discriminated must have a substantially plane surface. The disclosed method then consists in successively transmitting substantially plane waves at slightly different angular frequencies omega i, each wave being furthermore sent with two different polarizations p and p' chosen in such a way that these different coefficients of reflection on the obstacles according to the incidence of the waves give a criterion of discrimination.

### SUMMARY OF THE INVENTION

A main object of the invention is thus to provide a method and an apparatus for radar-based level gauging, wherein detected microwaves as reflected from the surface of the liquid or solid can be distinguished from detected microwaves as reflected from other disturbing structures.

In this respect there is a particular object of the invention to provide such a method and such an apparatus, which are very useful in tanks having a large number of disturbing structures and in tanks where the radar-based level gauging equipment has to be mounted in region where disturbing structures do occur.

A further object of the present invention is to provide such a method and such an apparatus, which provide for level gauging also of highly turbulent surfaces, where the reflected microwaves are weak.

A still further object of the invention is to provide such a method and such an apparatus, which are reliable, efficient, accurate, and precise.

These objects, among others, are attained by methods and apparatuses as claimed in the appended claims.

The inventor of the present invention has noted that the detected microwave signal, which has been reflected against the surface of the liquid or granular solid, is distinguishable by means having notably different signal strength in the two different polarization states. This is true as long as the surface is calm. In contrast thereto, the detected microwave signal(s), which has been reflected against the surface of the interfering structure(s), has (have) typically similar signal strength(s) in the two different polarization states. For the microwave signal any two preferably orthogonal polarizations will cover all different possible combinations. In the signal processing, however, more than two different signals may be formed and used.

By detecting the microwave echoes in two separate polarizations a further processing can be performed not only limited to the detection and rejection of disturbing echoes, but also for enabling a decrease of the influence of disturbing echoes close to the surface echo. For each echo a linear combination of the signals in the two received polarizations can be found, where the echo is very weak, while other echoes are less or much less reduced. This enables in many cases a substantial improvement of the signal-to-disturbance ratio assuming that different linear combinations are used for different disturbing echoes. Using prior art equipment large measuring errors cannot be avoided if the disturbing echo is close to the surface echo and of comparable strength.

Further, a time variation of the signal strengths is recorded to distinguish a microwave signal reflected against a turbulent surface from microwave signals reflected against fixed interfering structures. The time variation for the echo from a turbulent surface can in stochastic sense in most cases be described as Raleigh distributed. This can be used as one distinctive feature to separate the echo from the turbulent surface from the much more steady echo from a fixed disturbing echo. In one embodiment of the invention the polarization diversity is combined with the time variation measurement to obtain a selection criteria, which is usable, both for calm and turbulent surfaces.

Transceiver apparatuses capable of producing polarized microwave radiation and of receiving reflected microwave radiation in two different polarization states separately include preferably any of a power divider, particularly a Wilkinson power divider, a directional coupler, a ferrite circulator, or multiple antennas.

According to a second aspect of the present invention there is provided a radar-based level gauge apparatus for performing the method according to the first aspect of the invention.

By means of the present invention a very robust routine for distinguishing detected microwave signals, which have been reflected against the surface of the substance gauged, may be implemented. As compared to prior art devices the invention provides for measurement in more disturbing environments, i.e. where more interfering echoes do occur, with higher accuracy. For instance, microwave signals reflected at the surface of the substance, may be distinguished despite being weaker to much weaker than a microwave signal as reflected against an interfering structure.

The radar-based level gauges are used to measure levels in tanks, which for the purpose of the present invention include not only large containers but also processing apparatuses such as, for example, reactors, centrifuges, mixers, hoppers, graders, or heat-treatment furnaces and similar devices, which are used in e.g. food chemistry, pharmaceutical chemistry, biochemistry, gene chemistry and petrochemistry.

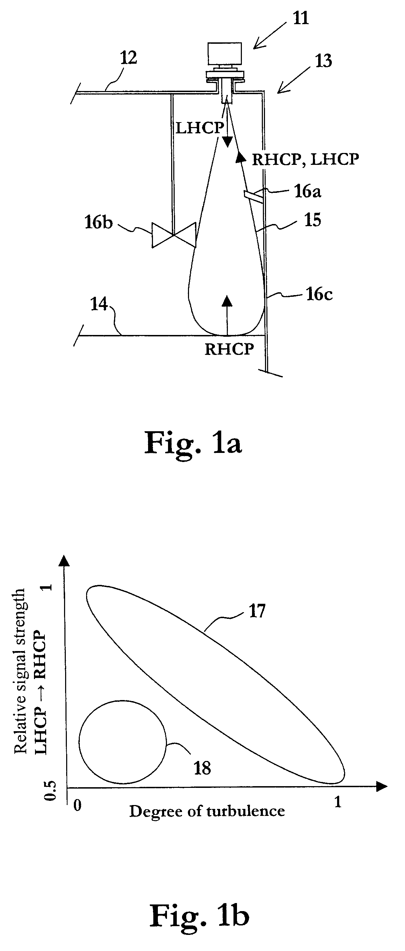

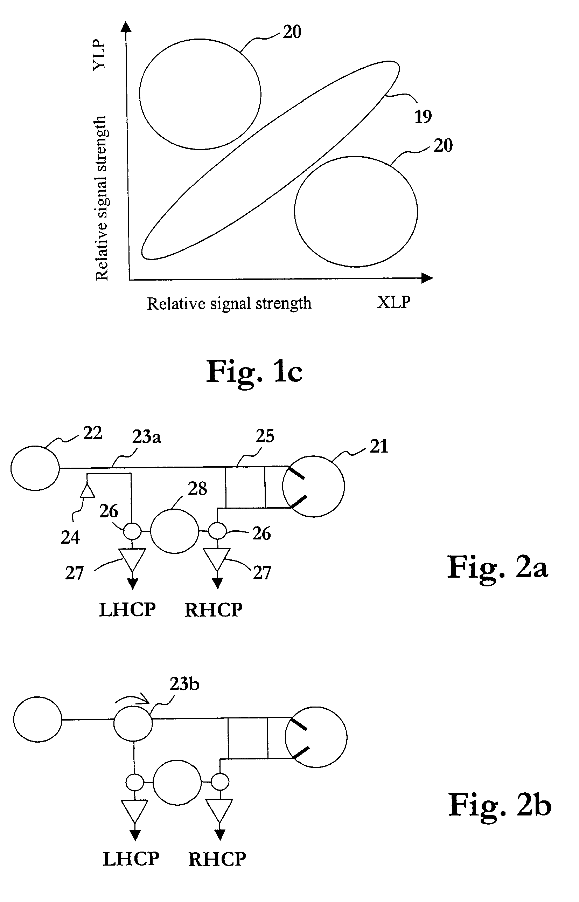

Further characteristics of the invention, and advantages thereof, will be evident from the detailed description of preferred embodiments of the present invention given hereinafter and the accompanying Figs. 1-4, which are given by way of illustration only, and thus are not limitative of the present invention.

### BRIEF DESCRIPTION OF THE DRAWINGS

Fig. 1a illustrates schematically, in a side view, an apparatus for radar-based level gauging according to a preferred embodiment of the present invention.
Figs. 1b-c are diagrams illustrating various polarization properties of different kind of echoes.
Figs. 2a-f illustrate schematically, in side views, various implementations of a transceiver structure used in radar-based level gauging apparatuses of the present invention.
Fig. 3 shows schematically a diagram of the amplitude of the received reflected microwave signal as a function of propagation time for two different polarization states as obtained by the apparatus of Fig. 1 indicating microwave signals as reflected from the surface of the matter gauged and from a fixed structure in the tank.
Fig. 4 is a schematic flow diagram illustrating a method for radar-based level gauging according to a preferred embodiment of the present invention.

### DESCRIPTION OF PREFERRED EMBODIMENTS

With reference to Fig. 1a, which schematically illustrates, in a side view, an apparatus aimed for radar-based level gauging, a preferred embodiment of the present invention will be described. The apparatus may be a frequency modulated continuous wave (FMCW) radar apparatus, a pulsed radar apparatus, or any other type of distance measuring radar.

The radar-based level gauge, denoted by 11 in Fig. 1a, is mounted above an opening of a roof 12 of a tank 13 or container filled with a liquid or a granular solid, the level 14 of which being gauged. The tank 13, of which only portions are shown in Fig. 1a, has typically a number of structures, e.g. a support beam 16a, an agitator 16b and a tank side wall 16c, that may create disturbing microwave reflections within the tank. When a radar level gauge is to be installed a typical criteria is to find a location where the influence of such disturbances is small but the practical possibilities to attain this criteria is generally small.

During operation, the radar-based level gauge 11 transmits a microwave signal towards the surface 14 of the liquid or granular solid in the tank 13, and receives the microwave signal as reflected against the surface, i.e. the surface echo. Further, the radar-based level gauge 11 comprises, or is connected to, a signal processing device (not explicitly illustrated) for calculating from the propagation time of the microwave signal from the radar-based level gauge 11 to the level 14 of the liquid or granular solid, and back to the radar-based level gauge 11.

The expression *propagation time* is used throughout this text as a general expression for a result of distance calculations. Several types of radar-based apparatuses are known for detection of echoes and distance evaluations. Different radar-based apparatuses use different methods and different intermediate results will occur. In each case, however, the radar input signal can be described as echoes of different amplitude and phase ordered after their delay time as compared to the transmitted signal.

One example is a pulsed radar-based level gauging apparatus, where a sampling technique is used for re-scaling or stretching the time by a factor 1,000-1,000,000. Another example is the FMCW radar-based level gauging apparatus, where a usually linear frequency sweep results in a spectrum where the propagation time is translated to intermediate frequency (IF). In this case the IF signal corresponds to the Fourier transform of the IF signal for the pulsed case. The very short time differences (1.5 mm distance corresponds to 0.01 ns) will in both cases be translated (downscaled) to signals with a much more handy time and frequency behavior and thus the signal processing is simplified and components having lower price, lower current consumption etc. can be used.

According to the present invention the radar-based level gauge 11 transmits a microwave signal in a particular or predetermined polarization state towards the surface 14 of the liquid or granular solid and surrounding interfering structures 16a-c; and detects temporally resolved and separately, in two different polarization states, microwave signal echoes as reflected against the surface 14 and the surrounding interfering structures 16a-c. By *temporally resolved* is here meant that the delay times as compared to the transmitted signal, or other parameter values depending thereon, are recorded for the echoes.

Preferably, the radar-based level gauge 11 transmits a circularly polarized microwave signal, e.g. left hand circularly polarized LHCP as illustrated in Fig. 1a or right hand circularly polarized RHCP, and detects microwave signal echoes in both left and right hand circular polarization states LHCP, RHCP. However, other polarization states are possible, such as e.g. two orthogonal linear polarization states XLP, YLP.

The present inventor has discovered that different structures in the tank environment change the polarization state of a microwave signal differently at reflection. For instance, a calm surface 14 changes the polarization state of an incident microwave. Given an incident left hand circularly polarized LHCP microwave signal, the surface echo will be essentially right hand circularly polarized RHCP, as is indicated in Fig. 1a. In contrast thereto most interfering structures will only partly change the polarization of the incident polarized microwave signal, and the echoes from the interfering structures will in general have similar signal strengths in the two different circularly polarization states LHCP, RHCP. This is indicated for the support beam 16a in Fig. 1a. Another way to express this is that a linearly polarized wave will have markedly different reflection if the polarization is parallel or if it is perpendicular to for instance a straight steel beam.

Thus, the signal processing device of the level gauge 11 is adapted to distinguish, based on the notably different signal strengths of the separately detected microwave signal echoes in the two different polarization states, the surface echo. Depending on the type of radar-based level gauge used only the different amplitudes may be detected or both different amplitudes and different phase may be detected. Most pulsed systems utilize only the amplitude while a typical FMCW-system may use both phase and amplitude.

Finally, when the surface echo is found the level of the liquid or granular solid is calculated from the propagation time of the surface echo.

The received signal can be described by a diagram where the depolarization of the received signal is shown as a function of the degree of turbulence. Degree of turbulence can be defined in different ways but is a measure on the time dependence and can be defined as the standard deviation of the amplitude divided by the average value of the amplitude. An alternative formulation is the difference between maximum amplitude and minimum amplitude divided by the average amplitude. In Fig. 1b the degree of turbulence is assumed to be near 0 for the echo from a calm surface but near 1 for the echo from a turbulent surface. Likewise, depolarization can be defined in different ways but 1 is in Fig. 1b assumed to correspond to a smooth surface, where the transmitted LHCP signal is received as an entirely RHCP signal (or RHCP to LHCP), while 0.5 implies that half the received power is received as LHCP and the other half as RHCP (which is the case for a turbulent surface). A typical property of a circularly polarized wave (LHCP or RHCP) is that the direction of polarization is reversed by the reflection (LHCP to RHCP etc.).

When the surface is turbulent the surface echo does not change polarization state completely as can be seen in Fig. 1b, wherein the relative signal strength of right hand circularly polarized RHCP microwaves as a function of relative degree of turbulence when left hand circularly polarized LHCP microwaves are transmitted from the gauge is shown. A surface echo area is indicated by 17, where echoes from a calm surface are found in the upper portion of the area 17, i.e. a high relative RHCP signal strength and low relative degree of turbulence, whereas echoes from a highly turbulent surface are found in the lower portion of the area 17, i.e. a relative RHCP signal strength closer to 0.5 and high relative degree of turbulence. An area for typical echoes from disturbing structures in the tank is indicated by 18, i.e. echoes having a relative RHCP signal strength closer to 0.5 and low relative degree of turbulence. Thus, by means of repeating the transmission and detection a time variation of the signal strengths of the various echoes may be measured. Then, turbulent surface echoes may be distinguished from echoes from fixed structures by means of searching for detected echoes with a noticeable time variation. Thus, neither the time dependence nor the polarization alone can distinguish fixed echoes from surface echoes, but when combined in a suitable way a much more efficient tool for distinguishing is obtained.

In some environments the selection procedures as discussed above may not be sufficient for selecting the correct surface echo by high certainty. In such circumstances a signal in two different, preferably orthogonal, linearly polarized polarization states XLP, YLP can be formed from the microwave signal detected in the two circular polarization states, and the selection procedure for selection of the correct surface echo can be based also on the signal in the two different linearly polarized polarization states as formed.

Surface echoes from at least calm surfaces will be of similar strengths for two different orthogonal linear polarization XLP, YLP states, whereas interfering echoes will have noticeably different signal strengths in the two different linear polarizations. This is illustrated in Fig. 1c, which shows the relative signal strength of vertically linearly polarized YLP microwaves as a function of the relative signal strength of horizontally linearly polarized XLP microwaves. Most surface echoes are found within an area denoted 19, whereas most interfering echoes are found within any of the areas denoted by 20.

Thus, classification of the echo in order to simplify the selection of the correct surface echo can be performed but this can be seen as just a first step. The extraction of two signal channels received in two polarizations enables the forming of an arbitrary linear combination of the signals and by a suitable choice of such a linear combination it is generally possible to improve the signal-to-disturbance ratio. By means of the echo selection procedure according to the present invention, surface echoes having signal strengths, which are much lower than signal strengths of interfering echoes, are detectable and distinguishable.

Besides the signal strength the phase of the radar signal is important. The amplitude and phase of a signal is called the complex amplitude. Depending on details in the radar-based level gauging apparatus the amplitude only or both amplitude and phase are measured.

Next, with reference to Figs. 2a-f various implementations of the antenna structure used for sending and receiving the microwaves in an apparatus of the present invention. Note that while only a few examples are explicitly given below, the present invention is not limited to those, but can be implemented by any structure capable of sending microwaves in a particular polarization state and receiving microwaves in two different polarization states separately. However, radar level gauges are low cost items as compared to most other radar equipment, and thus the antenna structure used is preferably simple and of low cost compared.

In a typical embodiment the radar transmitter is connected to a circularly polarized antenna, while the receiver (subsequently named the main receiving channel) is connected to a circularly polarized antenna with the opposite direction. By this difference in polarization the two antenna functions can be included in one physical antenna yet without (ideally seen) coupling between them. By this the use of circular polarization a transmit/receive switch is avoided in the case of a rotationally symmetric target. The second receiver channel (subsequently named auxiliary receiving channel) is connected via a directional coupler and receives a reflected signal having the same polarization as the transmitted signal. Both receiving channels include a mixer and IF (intermediate frequency) amplifier but depending on the type of radar different LO (local oscillator) signal can be used. A typical FMCW system for this use have homodyne mixing with a part of the transmitter signal with suitable delay as LO signal while a typical pulsed signal use a separate pulsed oscillator which in this case should be the same for both receiving channels.

In Fig. 2a is shown a transceiver structure including a waveguide OMT (orthomode transducer) based antenna 21 connected to a transmitter section 22 via a directional coupler 23 having a termination 24. Two receiver channels RHCP and LHCP are connected to the antenna via the directional coupler 23a and via a 90° hybrid 25. The microwave signals formed as described are fed to two mixers 26 followed by two amplifiers 27 for the intermediate frequency (IF). Reference numeral 28 indicates the local oscillator. The exact implementation may be different depending on the type of radar (FMCW, pulse) and in some cases low noise amplifiers will be necessary on the microwave side to get sufficient sensitivity. Such implemental details are, however, easily contemplated by the man skilled in the art after having read the present text. In Fig. 2a the directional coupler 23 acts as the transmit/receive connection device, which functionally is a part of most radar systems and especially those where the same antenna is used for the transmitter and the receiver. The transmit/receive device can be of different kinds. In Fig. 2b is shown a solution with a ferrite circulator 23b being used instead of the directional coupler (23a in Fig. 2a). The ferrite circulator 23b has three connections and directs the signal entered in one output to the next output in a given order. The ferrite circulator 23b is more complex than directional coupler but saves some decibel in the radar transmission power budget.

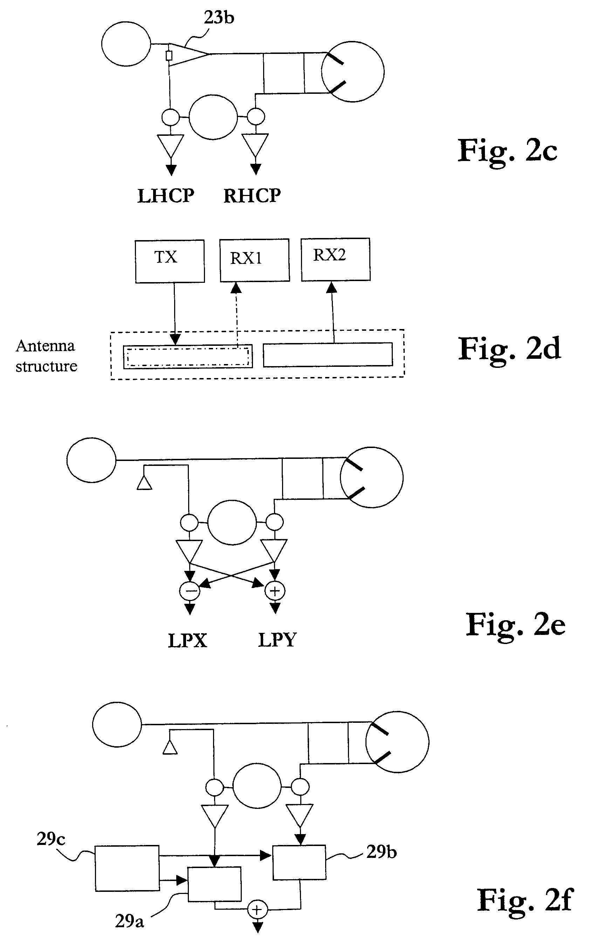

Fig. 2c shows another solution where a Wilkinson power divider 23c is used instead of the directional coupler and still maintaining the insulation between transmit and receive sections - in this case with 2x3 dB further loss as compared to the ideal circulator.

In Fig. 2d is shown a more general antenna structure with one transmitter part TX and two receiving parts RX1, RX2, each using essentially orthogonal polarizations and having a fair insulation to the transmitting antenna. For instance many planar antennas designs with dual polarization over the same surface are well known and widely used (not the least in the field of mobile phone base station antennas).

For a pulsed system also a switch can be used for the transmit/receive device.

In Fig. 2e is illustrated how to obtain two orthogonal linear signals XLP and YLP from the two orthogonal circular polarized signals as obtained by the device illustrated in Fig. 2a.

The echo selection routine is implemented in the signal processing included in, or associated with, the radar-based level gauge 11.

The routine may include generating, separately for each polarization state, the amplitude of the received reflected microwave signal as a function of propagation time up to reception. Noticeably, a calm surface of the liquid or granular solid gauged will give echoes of noticeably different amplitude in each polarization state, whereas many disturbing obstacles in the tank will give echoes of similar amplitudes in the different polarization states. Ideally, if a left hand circularly polarized microwave signal is reflected towards a calm surface its polarization state changes to right hand circular polarization at reflection.

Two potential problems with disturbing echoes are incorrect echo selection (where a disturbing echo, perhaps stronger than the surface echo, is taken for the surface echo) and interference errors, where the disturbing echoes cause measuring echoes (even if they are substantially weaker than the surface echo). Errors typically occur only when the surface echo is close to the disturbing echo (a few tenths of a meter). The type of receiver and procedures discussed above will decrease considerable the risk of incorrect echo selection, whereas a reduction of the interference errors needs other means. Still the two receiver channels can be used and using a signal processing as shown in Fig. 2f the disturbing echo can be suppressed considerably, which improves the signal-to-disturbance ratio. The type of radar device has be a device, such as for instance a commonly used FMCW radar-based level gauge, which measures both phase and amplitude. Phase and amplitude for the main receiver channel and the auxiliary receiver channel (as obtained e.g. by the device of Fig. 2a) can be altered individually by means of a respective device for amplifying and phase delaying 29a-b under control of a control device 29c. Then, the two channels are mixed whereby the disturbing echo can be more or less cancelled. The factors used to obtain the cancellation are different for different disturbing echoes but they are approximately the same in a vicinity of a specific disturbing echo.

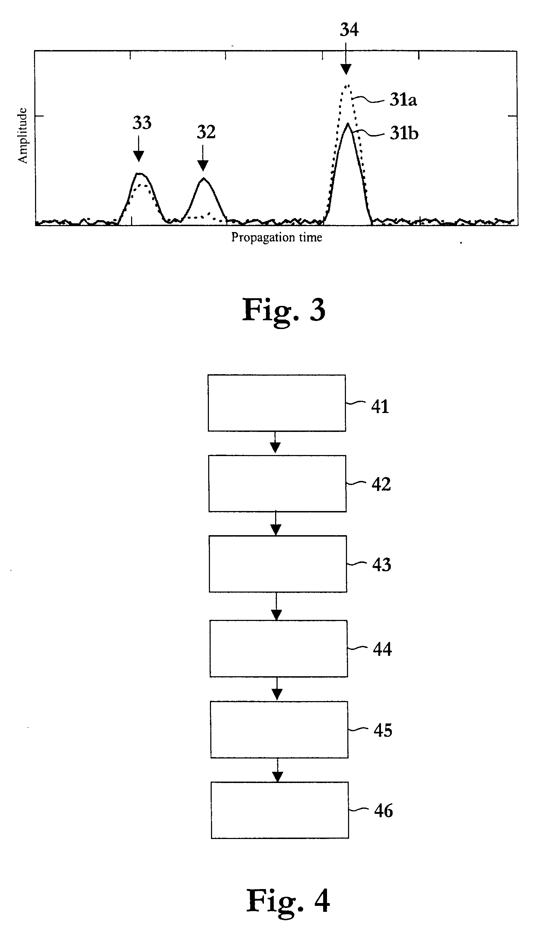

Fig. 3 shows schematically an example of a diagram of the amplitude of the received reflected microwave signals as a function of propagation time for two orthogonal circular polarizations, e.g. as illustrated in Fig. la. Left hand circularly polarized transmitted microwaves are assumed. The dotted curve 31a indicates received signal with left hand circular polarization, and the solid curve 31b indicates received signal with right hand circular polarization.

Three microwave signal echoes 32, 33, 34 are clearly visible. By analyzing the amplitudes of the echoes it is established that the echo 32 is reflected from a calm surface of the liquid or granular solid gauged, whereas the echoes 33, 34 are reflected from a fixed structure in the tank, e.g. a beam, an agitator, or a tank side wall. With a suitable logic, selection of the correct surface echo can be made even if the surface echo is not the strongest one.

Thus, a method for radar-based gauging of the level of a substance in a tank can be described with reference to the schematic flow scheme shown in Fig. 4. A left hand circularly polarized microwave signal is, in a step 41, transmitted. The microwave signal as reflected towards the surface of the substance gauged and towards any disturbing structures, is, in a step 42, received and detected separately in left and right hand circular polarization states. Then, for each of the two polarization states, the amplitude of the detected reflected microwave signal as a function of propagation time is, in a step 43, calculated. By comparison of the two functions as being illustrated in Fig. 3 the microwave signal 32 as reflected against the surface is, in a step 44, distinguished. Finally, in steps 45 and 46, the propagation time for the microwave signal 32 as reflected against the surface is determined and the level of the substance is calculated from the propagation time.

It shall be appreciated that the amplitude of the received reflected microwave signals as a function of propagation time for a number of distance cells, i.e. level intervals of the surface of the gauged matter, and for each different polarization state may be stored in a database. Then knowledge of the localization of disturbing structures and interfering echoes in a particular tank may be collected with time. Once having a database it may be consulted when a gauged level has been calculated.

It shall further be appreciated that any of the methods or method steps identified above may be combined with the use of lobe diversity to obtain even better capabilities of distinguishing the surface echo under various conditions. In this respect reference is made to our co-pending European patent application entitled "Method and apparatus for radar-based level gauging" (inventor: Kurt-Olov Edvardsson) and filed the very same date as the present application.

It shall still further be appreciated that the inventive concept of having one polarized transmit channel and two differently polarized receive channels is fully reciprocal in the sense that the present invention may be realized by using two differently polarized transmit channels and one polarized receive channel.

To implement such concept the transmit channels have to operate one after the other in order to detect individually the received echo signal from each transmitted channel.

A method for radar-based gauging of the level of a substance in a tank having at least one interfering structure thus comprises the steps of (i) transmitting microwave signals in two different predetermined polarization states, one after the other, towards a surface (14) of the substance and the at least one interfering structure; individually for each of the transmitted microwave signals detecting temporally resolved in a predetermined polarization state, microwave signals (32, 33) as reflected against the surface of the substance and as reflected against the at least one interfering structure; distinguishing, based on signal strengths of the microwave signals detected temporally resolved, the detected microwave signal (32), which has been reflected against the surface of the substance; and calculating based on a propagation time of the distinguished microwave signal the level of the substance in the tank.

If the two polarization states of the transmitted signals are left and right hand circularly polarized the receive channel is typically arranged to receive and detect either one of left or right hand circularly polarized microwaves.

A surface echo will thus have very different signal strengths for the two transmit polarizations, whereas a depolarizing disturbing structure will give echoes with similar signal strengths for the two transmit polarizations.

## Claims

1. A method for radar-based gauging of the level of a substance in a tank (13) having at least one interfering structure (16a-c), comprising:
- transmitting a microwave signal in a predetermined polarization state (LHCP) towards a surface (14) of said substance and said at least one interfering structure; and
- detecting temporally resolved and separately in two different polarization states (LHCP, RHCP), microwave signals (32, 33, 34) as reflected against the surface of said substance and as reflected against said at least one interfering structure, **characterized by** the steps of:
- repeating said steps of transmitting and detecting to obtain time variations of the microwave signals as reflected against the surface of said substance and as reflected against said at least one interfering structure;
- distinguishing, based on signal strengths of the microwave signals detected temporally resolved and separately in said two different polarization states and based on the time variations of the microwave signals detected temporally resolved and separately in said two different polarization states, the detected microwave signal (32), which has been reflected against the surface of said substance; and
- calculating based on a propagation time of the distinguished microwave signal the level of said substance in said tank.

2. The method of claim 1 wherein it is also determined whether the surface of said substance is calm or turbulent based on the signal strengths of the microwave signals detected temporally resolved and separately in said two different polarization states and/or based on the time variations of the microwave signals detected temporally resolved and separately in said two different polarization states.

3. The method of claim 1 or 2 wherein said predetermined polarization state is a circularly polarized polarization state (LHCP).

4. The method of claim 3 wherein said two different polarization states are two essentially orthogonal circularly polarized polarization states (LHCP, RHCP).

5. The method of claim 4 wherein the detected microwave signal, which has been reflected against the surface of said substance, is distinguished by means having notably different signal strengths in said two different polarization states (17; 31a-b, 32) or by means of having noticeable time variation.

6. The method of claim 4 or 5 wherein
- a signal in two different linearly polarized polarization states (XLP, YLP) is formed from the microwave signal in said two essentially orthogonal circularly polarized polarization states; and
- said step of distinguishing is based also on said signal in two different linearly polarized polarization states.

7. The method of claim 1 or 2 wherein said predetermined polarization state is a linearly polarized polarization state; and said two different polarization states are two essentially orthogonal linearly polarized polarization states.

8. The method of any of claims 1-7 wherein
- a signal strength as a function of propagation time (31a-b) for each reflected microwave signal in each of said two different polarization states (LHCP, RHCP) is obtained in said step of detecting; and
- the detected microwave signal, which has been reflected against the surface of said substance, is distinguished by means of comparing said functions (31a-b).

9. The method of claim 8 wherein said signal strength as a function of propagation time for each reflected microwave signal in each of said two different polarization states obtained in said step of detecting is stored in a database.

10. The method of any of claims 1-9 wherein said substance is a liquid or a granular solid.

11. The method of any of claims 1-10 wherein said at least one interfering structure is any of a beam (16a); an agitator (16b) or a tank side wall (16c).

12. The method of any of claims 1-11 wherein said step of detecting is performed by a device including any of a power divider, particularly a Wilkinson power divider, a directional coupler, a ferrite circulator, or multiple antennas.

13. The method of any of claims 1-12 wherein the phase of each of said detected microwave signals is measured.

14. The method of any of claims 1-13 wherein said temporally resolved and separately in two different polarization states detected microwave signals are mixed, preferably after having had their respective amplitudes and optionally phases altered, to form microwave signals, of which the microwave signal as reflected against said at least one interfering structure is suppressed.

15. An apparatus for radar-based gauging of the level of a substance in a tank (13) having at least one interfering structure (16a-c) comprising:
- a transmitter for transmitting a microwave signal in a predetermined polarization state (LHCP) towards a surface (14) of said substance and said at least one interfering structure; and
- a detector for detecting temporally resolved, separately in two different polarization states (LHCP, RHCP), microwave signals (32, 33, 34) as reflected against the surface of said substance and as reflected against said at least one interfering structure, **characterized in that**:
- said transmitter and said detector is adapted to repeatedly transmit and detect, respectively, to obtain time variations of the microwave signals as reflected against the surface of said substance and as reflected against said at least one interfering structure; and
- a processing device is provided for distinguishing based on signal strengths of the microwave signals detected temporally resolved and separately in said two different polarization states and based on on the time variations of the microwave signals detected temporally resolved and separately in said two different polarization states, the detected microwave signal (32), which has been reflected against the surface of said substance; and for calculating, based on a propagation time of the distinguished microwave signal, the level of said substance in said tank.

16. The apparatus of claim 15 wherein said processing device is provided for also determining whether the surface of said substance is calm or turbulent based on the signal strengths of the microwave signals detected temporally resolved and separately in said two different polarization states and/or based on the time variations of the microwave signals detected temporally resolved and separately in said two different polarization states.

17. The apparatus of claim 15 or 16 wherein said predetermined polarization state is a circularly polarized polarization state (LHCP).

18. The apparatus of claim 17 wherein said two different polarization states are two essentially orthogonal circularly polarized polarization states (LHCP, RHCP).

19. The apparatus of claim 18 wherein said processing device is adapted to distinguish the detected microwave signal, which has been reflected against the surface of said substance, by means having notably different signal strength in said two different polarization states (17; 31a-b, 32).

20. The apparatus of claim 18 or 19 wherein said processing device is adapted to form a signal in two different linearly polarized polarization states (XLP, YLP) from the microwave signal in said two essentially orthogonal circularly polarized polarization states; and to base the distinguishing also on said signal in two different linearly polarized polarization states.

21. The apparatus of any of claims 16-20 wherein said processing device is adapted to form a signal strength as a function of propagation time (31a-b) for each detected reflected microwave signal in each of said two different polarization states (LHCP, RHCP); and to distinguish the detected microwave signal, which has been reflected against the surface of said substance, by means of comparing said functions (31a-b).

22. The apparatus of any of claims 15-21 wherein said substance is a liquid or a granular solid.

23. The apparatus of any of claims 15-22 wherein said at least one interfering structure is any of a beam (16a); an agitator (16b) or a tank side wall (16c).

24. The apparatus of any of claims 15-23 wherein said step of detecting is performed by a device including any of a power divider, particularly a Wilkinson power divider, a directional coupler, a ferrite circulator, or multiple antennas.

25. A method for radar-based gauging of the level of a substance in a tank (13) having at least one interfering structure (16a-c), comprising:
- transmitting microwave signals in two different predetermined polarization states, one after the other, towards a surface (14) of said substance and said at least one interfering structure; and
- individually for each of the transmitted microwave signals detecting temporally resolved in a predetermined polarization state, microwave signals (32, 33) as reflected against the surface of said substance and as reflected against said at least one interfering structure, **characterized by** the steps of:
- repeating said steps of transmitting and detecting to obtain time variations of the microwave signals as reflected against the surface of said substance and as reflected against said at least one interfering structure;
- distinguishing, based on signal strengths of the microwave signals detected temporally resolved and based on the time variations of the microwave signals detected temporally resolved, the detected microwave signal (32), which has been reflected against the surface of said substance; and
- calculating based on a propagation time of the distinguished microwave signal the level of said substance in said tank.

## Patentansprüche

1. Verfahren zur Radarmessung des Pegels einer Substanz in einem Tank (13), der mindestens eine störende Struktur (16a-c) hat, umfassend:
- Senden eines Mikrowellensignals in einem vorgegebenen Polarisationszustand (LHCP) zu einer Oberfläche (14) der Substanz und der mindestens einen störenden Struktur; und
- Feststellen von zeitlich aufgelösten und getrennten Mikrowellensignalen (32, 33, 34) in zwei verschiedenen Polarisationszuständen (LHCP, RHCP), wie sie von der Oberfläche der Substanz und von der mindestens einen störenden Struktur reflektiert werden, **gekennzeichnet durch** die folgenden Schritte:
- Wiederholen der Schritte des Sendens und Feststellens, um zeitliche Variationen der Mikrowellensignale zu erhalten, wie sie von der Oberfläche der Substanz reflektiert und wie sie von der mindestens einen störenden Struktur reflektiert werden;
- auf der Basis der Signalstärken der Mikrowellensignale, die zeitlich aufgelöst und in zwei verschiedenen Polarisationszuständen festgestellt werden, und auf der Basis der zeitlichen Variationen der Mikrowellensignale, die zeitlich aufgelöst und in zwei verschiedenen Polarisationszuständen festgestellt werden, klares Erkennen des festgestellten Mikrowellensignals (32), das von der Oberfläche der Substanz reflektiert wurde; und
- auf der Basis einer Ausbreitungszeit des erkannten Mikrowellensignals, Berechnen des Pegels der Substanz im Tank.

2. Verfahren nach Anspruch 1, wobei auch bestimmt wird, ob die Oberfläche der Substanz ruhig oder turbulent ist, auf der Basis der Signalstärken der Mikrowellensignale, die zeitlich aufgelöst und in zwei verschiedenen Polarisationszuständen getrennt festgestellt werden und/oder auf der Basis der Zeitvariationen der Mikrowellensignale, die zeitlich aufgelöst und in den zwei verschiedenen Polarisationszuständen getrennt festgestellt werden.

3. Verfahren nach Anspruch 1 oder 2, wobei der vorgegebene Polarisationszustand ein zirkular polarisierter Polarisationszustand (LHCP) ist.

4. Verfahren nach Anspruch 3, wobei die zwei verschiedenen Polarisationszustände zwei im Wesentlichen orthogonale, zirkular polarisierte Polarisationszustände (LHCP, RHCP) sind.

5. Verfahren nach Anspruch 4, wobei das festgestellte Mikrowellensignal, das an der Oberfläche der Substanz reflektiert wurde, dadurch differenziert wird, dass es bemerkenswert unterschiedliche Signalstärken in zwei verschiedenen Polarisationszuständen (17; 31a-b, 32) hat, oder dadurch, dass es eine merkliche Zeitvariation aufweist.

6. Verfahren nach Anspruch 4 oder 5, wobei
- ein Signal in zwei verschiedenen linear polarisierten Polarisationszuständen (XLP, YLP) aus dem Mikrowellensignal in zwei im Wesentlichen orthogonalen, zirkular polarisierten Polarisationszuständen gebildet wird; und
- der Schritt des Differenzierens auch auf dem Signal in zwei verschiedenen linear polarisierten Polarisationszuständen beruht.

7. Verfahren nach Anspruch 1 oder 2, wobei der vorgegebene Polarisationszustand ein linear polarisierter Polarisationszustand ist und die zwei verschiedenen Polarisationszustände zwei im Wesentlichen orthogonale, linear polarisierte Polarisationszustände sind.

8. Verfahren nach einem der Ansprüche 1-7, wobei
- eine Signalstärke als Funktion der Ausbreitungszeit (31a-b) für jedes reflektierte Mikrowellensignal in jedem der zwei verschiedenen Polarisationszustände (LHCP, RHCP) im Schritt des Feststellens erhalten wird; und
- das festgestellte Mikrowellensignal, das an der Oberfläche der Substanz reflektiert wurde, durch Vergleichen der Funktionen (31a-b) klar erkannt wird.

9. Verfahren nach Anspruch 8, wobei die Signalstärke als Funktion der Ausbreitungszeit für jedes reflektierte Mikrowellensignal in jedem der zwei verschiedenen Polarisationszustände, die im Schritt des Feststellens erhalten wird, in einer Datenbank gespeichert wird.

10. Verfahren nach einem der Ansprüche 1-9, wobei die Substanz eine Flüssigkeit oder ein granulärer Feststoff ist.

11. Verfahren nach einem der Ansprüche 1-10, wobei die mindestens eine störende Struktur eine aus einem Balken (16a), einem Rührwerk (16b) oder einer Tankseitenwand (16c) ist.

12. Verfahren nach einem der Ansprüche 1-11, wobei der Schritt des Feststellens von einer Vorrichtung ausgeführt wird, die ein Element aus einem Leistungsverteiler, insbesondere einem Wilkinson-Leistungsverteiler, einem Richtungskoppler, einem Ferritzirkulator oder mehreren Antennen umfasst.

13. Verfahren nach einem der Ansprüche 1-12, wobei die Phase jedes festgestellten Mikrowellensignals gemessen wird.

14. Verfahren nach einem der Ansprüche 1-13, wobei die zeitlich aufgelösten und in zwei verschiedenen Polarisationszuständen getrennten, festgestellten Mikrowellensignale gemischt sind, vorzugsweise nachdem ihre jeweiligen Amplituden und optional ihre Phasen geändert wurden, um Mikrowellensignale zu bilden, von denen das Mikrowellensignal, das an der mindestens einen störenden Struktur reflektiert wird, unterdrückt wird.

15. Vorrichtung zum Messen des Pegels einer Substanz auf Radarbasis in einem Tank (13), der mindestens eine störende Struktur (16a-c) hat, umfassend:
- einen Sender zum Senden eines Mikrowellensignals in einem vorgegebenen Polarisationszustand (LHCP) zu einer Oberfläche (14) der Substanz und der mindestens einen störenden Struktur; und
- einen Detektor zum Feststellen von zeitlich aufgelösten und getrennten Mikrowellensignalen (32, 33, 34) in zwei verschiedenen Polarisationszuständen (LHCP, RHCP), wie sie von der Oberfläche der Substanz und von der mindestens einen störenden Struktur reflektiert werden, **gekennzeichnet dadurch, dass**:
- der Sender und der Detektor zum wiederholten Senden bzw. Feststellen dafür ausgelegt sind, zeitliche Variationen der Mikrowellensignale zu erhalten, wie sie von der Oberfläche der Substanz reflektiert und wie sie von der mindestens einen störenden Struktur reflektiert werden; und
- eine Verarbeitungsvorrichtung wird bereitgestellt zum klaren Erkennen, auf der Basis der Signalstärken der Mikrowellensignale, die zeitlich aufgelöst und in zwei verschiedenen Polarisationszuständen festgestellt werden, und auf der Basis der zeitlichen Variationen der Mikrowellensignale, die zeitlich aufgelöst und in zwei verschiedenen Polarisationszuständen festgestellt werden, des festgestellten Mikrowellensignals (32), das von der Oberfläche der Substanz reflektiert wurde; und zum Berechnen, auf der Basis der Ausbreitungszeit des erkannten Mikrowellensignals, des Pegels der Substanz im Tank.

16. Vorrichtung nach Anspruch 15, wobei die Verarbeitungsvorrichtung auch zum Bestimmen vorgesehen ist, ob die Oberfläche der Substanz ruhig oder turbulent ist, auf der Basis der Signalstärken der Mikrowellensignale, die zeitlich aufgelöst und in zwei verschiedene Polarisationszuständen getrennt sind und/oder auf der Basis der Zeitvariationen der Mikrowellensignale, die zeitlich aufgelöst und in zwei verschiedene Polarisationszuständen getrennt festgestellt werden.

17. Vorrichtung nach Anspruch 15 oder 16, wobei der vorgegebene Polarisationszustand ein zirkular polarisierter Polarisationszustand (LHCP) ist.

18. Vorrichtung nach Anspruch 17, wobei zwei verschiedene Polarisationszustände zwei im Wesentlichen orthogonale, zirkular polarisierte Polarisationszustände (LHCP, RHCP) sind.

19. Vorrichtung nach Anspruch 18, wobei die Verarbeitungsvorrichtung zum Erkennen des festgestellten Mikrowellensignals ausgelegt ist, das an der Oberfläche der Substanz reflektiert wurde, dadurch dass es eine merklich verschiedene Signalstärke in den zwei verschiedenen Polarisationszuständen (17; 31a-b, 32) hat.

20. Vorrichtung nach Anspruch 18 oder 19, wobei die Verarbeitungsvorrichtung zum Bilden eines Signals in zwei verschiedenen, linear polarisierten Polarisationszuständen (XLP, YLP) aus dem Mikrowellensignal in den zwei im Wesentlichen orthogonalen, zirkular polarisierten Polarisationszuständen ausgelegt ist; und zum Erkennen auf der Basis des Signals in zwei verschiedenen, linear polarisierten Polarisationszuständen ausgelegt ist.

21. Vorrichtung nach einem der Ansprüche 16-20, wobei die Verarbeitungsvorrichtung zum Bilden einer Signalstärke als Funktion der Ausbreitungszeit (31a-b) für jedes festgestellte reflektierte Mikrowellensignal in jedem der zwei verschiedenen Polarisationszustände (LHCP, RHCP) ausgelegt ist; und zum Erkennen des festgestellten Mikrowellensignals, das an der Oberfläche der Substanz reflektiert wurde, mit Hilfe des Vergleichs der Funktionen (31a-b) ausgelegt ist.

22. Vorrichtung nach einem der Ansprüche 15-21, wobei die Substanz eine Flüssigkeit oder ein granulärer Feststoff ist.

23. Vorrichtung nach einem der Ansprüche 15-22, wobei die mindestens eine störende Struktur eine aus einem Balken (16a), einem Rührwerk (16b) oder einer Tankseitenwand (16c) ist.

24. Vorrichtung nach einem der Ansprüche 15-23, wobei der Schritt des Feststellens von einer Vorrichtung ausgeführt wird, die ein Element aus einem Leistungsverteiler, insbesondere einem Wilkinson-Leistungsverteiler, einem Richtungskoppler, einem Ferritzirkulator oder mehreren Antennen umfasst.

25. Verfahren zur Radarmessung des Pegels einer Substanz in einem Tank (13), der mindestens eine störende Struktur (16a-c) hat, umfassend:
- Senden von Mikrowellensignalen in zwei verschiedenen vorgegebenen Polarisationszuständen, nacheinander, zu einer Oberfläche (14) der Substanz und der mindestens einen störenden Struktur; und
- für jedes der gesendeten Mikrowellensignale, individuelles Feststellen von zeitlich aufgelösten, in einem vorgegebenen Polarisationszustand befindlichen Mikrowellensignalen (32, 33), wie sie von der Oberfläche der Substanz reflektiert und von der mindestens einen störenden Struktur reflektiert werden, **gekennzeichnet durch** die folgenden Schritte:
- Wiederholen der Schritte des Sendens und Feststellens, um zeitliche Variationen der Mikrowellensignale zu erhalten, wie sie von der Oberfläche der Substanz reflektiert und wie sie von der mindestens einen störenden Struktur reflektiert werden;
- auf der Basis der Signalstärken der Mikrowellensignale, die zeitlich aufgelöst festgestellt werden, und auf der Basis der zeitlichen Variationen der Mikrowellensignale, die zeitlich aufgelöst festgestellt werden, klares Erkennen des festgestellten Mikrowellensignals (32), das von der Oberfläche der Substanz reflektiert wurde; und
- auf der Basis einer Ausbreitungszeit des erkannten Mikrowellensignals, Berechnen des Pegels der Substanz im Tank.

## Revendications

1. Procédé de mesure basée sur radar du niveau d'une substance dans un réservoir (13) ayant au moins une structure d'interférence (16a-c), comprenant :
- la transmission d'un signal micro-ondes dans un état de polarisation prédéterminé (LHCP) vers une surface (14) de ladite substance et ladite au moins une structure d'interférence ; et
- la détection de signaux micro-ondes (32, 33, 34), temporellement résolus et séparément dans deux états de polarisation différents (LHCP, RHCP), qui sont réfléchis contre la surface de ladite substance et qui sont réfléchis contre ladite au moins une structure d'interférence, **caractérisé par** les étapes de :
- la répétition desdites étapes de la transmission et de la détection pour obtenir des variations dans le temps des signaux micro-ondes qui sont réfléchis contre la surface de ladite substance et qui sont réfléchis contre ladite au moins une structure d'interférence ;
- la distinction, sur la base de forces de signal des signaux micro-ondes détectés temporellement résolus et séparément dans lesdits deux états de polarisation différents et sur la base des variations dans le temps des signaux micro-ondes détectés temporellement résolus et séparément dans lesdits deux états de polarisation, du signal micro-ondes détecté (32) qui a été réfléchi contre la surface de ladite substance ; et
- le calcul, sur la base d'un temps de propagation du signal micro-ondes distingué, du niveau de ladite substance dans ledit réservoir.

2. Procédé selon la revendication 1, dans lequel il est également déterminé si la surface de ladite substance est calme ou turbulente sur la base des forces de signal des signaux micro-ondes détectés temporellement résolus et séparément dans lesdits deux états de polarisation différents et/ou sur la base des variations dans le temps des signaux micro-ondes détectés temporellement résolus et séparément dans lesdits deux états de polarisation différents.

3. Procédé selon la revendication 1 ou 2, dans lequel ledit état de polarisation prédéterminé est un état de polarisation circulairement polarisé (LHCP).

4. Procédé selon la revendication 3, dans lequel lesdits deux états de polarisation différents sont deux états de polarisation circulairement polarisés essentiellement orthogonaux (LHCP, RHCP).

5. Procédé selon la revendication 4, dans lequel le signal micro-ondes détecté, qui a été réfléchi contre la surface de ladite substance, est distingué en ayant des forces de signal notablement différentes dans lesdits deux états de polarisation différents (17 ; 31a-b, 32) ou en ayant une variation dans le temps remarquable.

6. Procédé selon la revendication 4 ou 5, dans lequel :
- un signal dans deux états de polarisation linéairement polarisés différents (XLP, YLP) est formé à partir du signal micro-ondes dans lesdits deux états de polarisation circulairement polarisés essentiellement orthogonaux ; et
- ladite étape de la distinction est basée également sur ledit signal dans deux états de polarisation linéairement polarisés différents.

7. Procédé selon la revendication 1 ou 2, dans lequel ledit état de polarisation prédéterminé est un état de polarisation linéairement polarisé ; et lesdits deux états de polarisation différents sont deux états de polarisation linéairement polarisés essentiellement orthogonaux.

8. Procédé selon l'une quelconque des revendications 1 à 7, dans lequel :
- une force de signal en fonction d'un temps de propagation (31a-b) pour chaque signal micro-ondes réfléchi détecté dans chacun desdits deux états de polarisation différents (LHCP, RHCP) est obtenue à ladite étape de la détection ; et
- le signal micro-ondes détecté, qui a été réfléchi contre la surface de ladite substance, est distingué en comparant lesdites fonctions (31a-b) .

9. Procédé selon la revendication 8, dans lequel ladite force de signal en fonction d'un temps de propagation pour chaque signal micro-ondes réfléchi dans chacun desdits deux états de polarisation différents obtenue à ladite étape de la détection est mémorisée dans une base de données.

10. Procédé selon l'une quelconque des revendications 1 à 9, dans lequel ladite substance est un liquide ou un solide granulaire.

11. Procédé selon l'une quelconque des revendications 1 à 10, dans lequel ladite au moins une structure d'interférence est l'un d'un faisceau (16a), d'un agitateur (16b) ou d'une paroi latérale de réservoir (16c) .

12. Procédé selon l'une quelconque des revendications 1 à 11, dans lequel ladite étape de la détection est effectuée par un dispositif comprenant l'un d'un diviseur de puissance, particulièrement un diviseur de puissance Wilkinson, d'un coupleur directionnel, d'un circulateur de ferrite ou de plusieurs antennes.

13. Procédé selon l'une quelconque des revendications 1 à 12, dans lequel la phase de chacun desdits signaux micro-ondes détectés est mesurée.

14. Procédé selon l'une quelconque des revendications 1 à 13, dans lequel lesdits signaux micro-ondes détectés temporellement résolus et séparément dans deux états de polarisation différents sont mélangés, de préférence après altération de leurs amplitudes respectives et facultativement de leurs phases respectives, pour former des signaux micro-ondes, desquels le signal micro-ondes réfléchi contre ladite au moins une structure d'interférence est supprimé.

15. Appareil de mesure basée sur radar du niveau d'une substance dans un réservoir (13) ayant au moins une structure d'interférence (16a-c), comprenant :
- un émetteur pour la transmission d'un signal micro-ondes dans un état de polarisation prédéterminé (LHCP) vers une surface (14) de ladite substance et ladite au moins une structure d'interférence ; et
- un détecteur pour effectuer la détection de signaux micro-ondes (32, 33, 34), temporellement résolus et séparément dans deux états de polarisation différents (LHCP, RHCP), qui sont réfléchis contre la surface de ladite substance et qui sont réfléchis contre ladite au moins une structure d'interférence, **caractérisé en ce que** :
- ledit émetteur et ledit détecteur sont aptes à effectuer la répétition respectivement de la transmission et de la détection pour obtenir des variations dans le temps des signaux micro-ondes qui sont réfléchis contre la surface de ladite substance et qui sont réfléchis contre ladite au moins une structure d'interférence ; et
- un dispositif de traitement est fourni pour effectuer la distinction, sur la base de forces de signal des signaux micro-ondes détectés temporellement résolus et séparément dans lesdits deux états de polarisation différents et sur la base des variations dans le temps des signaux micro-ondes détectés temporellement résolus et séparément dans lesdits deux états de polarisation, du signal micro-ondes détecté (32) qui a été réfléchi contre la surface de ladite substance ; et le calcul, sur la base d'un temps de propagation du signal micro-ondes distingué, du niveau de ladite substance dans ledit réservoir.

16. Appareil selon la revendication 15, dans lequel ledit dispositif de traitement est fourni pour effectuer également la détermination si la surface de ladite substance est calme ou turbulente sur la base des forces de signal des signaux micro-ondes détectés temporellement résolus et séparément dans lesdits deux états de polarisation différents et/ou sur la base des variations dans le temps des signaux micro-ondes détectés temporellement résolus et séparément dans lesdits deux états de polarisation différents.

17. Appareil selon la revendication 15 ou 16, dans lequel ledit état de polarisation prédéterminé est un état de polarisation circulairement polarisé (LHCP).

18. Appareil selon la revendication 17, dans lequel lesdits deux états de polarisation différents sont deux états de polarisation circulairement polarisés essentiellement orthogonaux (LHCP, RHCP).

19. Appareil selon la revendication 18, dans lequel ledit dispositif de traitement est apte à effectuer la distinction du signal micro-ondes détecté, qui a été réfléchi contre la surface de ladite substance, en ayant des forces de signal notablement différentes dans lesdits deux états de polarisation différents (17 ; 31a-b, 32).

20. Appareil selon la revendication 18 ou 19, dans lequel ledit dispositif de traitement est apte à former un signal dans deux états de polarisation linéairement polarisés différents (XLP, YLP) à partir du signal micro-ondes dans lesdits deux états de polarisation circulairement polarisés essentiellement orthogonaux ; et à baser la distinction également sur ledit signal dans deux états de polarisation linéairement polarisés différents.

21. Appareil selon l'une quelconque des revendications 16 à 20, dans lequel ledit dispositif de traitement est apte à former une force de signal en fonction d'un temps de propagation (31a-b) pour chaque signal micro-ondes réfléchi détecté dans chacun desdits deux états de polarisation différents (LHCP, RHCP) ; et pour distinguer le signal micro-ondes détecté, qui a été réfléchi contre la surface de ladite substance, en comparant lesdites fonctions (31a-b).

22. Appareil selon l'une quelconque des revendications 15 à 21, dans lequel ladite substance est un liquide ou un solide granulaire.

23. Appareil selon l'une quelconque des revendications 15 à 22, dans lequel ladite au moins une structure d'interférence est l'un d'un faisceau (16a), d'un agitateur (16b) ou d'une paroi latérale de réservoir (16c) .

24. Appareil selon l'une quelconque des revendications 15 à 23, dans lequel ladite étape de la détection est effectuée par un dispositif comprenant l'un d'un diviseur de puissance, particulièrement un diviseur de puissance Wilkinson, d'un coupleur directionnel, d'un circulateur de ferrite ou de plusieurs antennes.

25. Procédé de mesure basée sur radar du niveau d'une substance dans un réservoir (13) ayant au moins une structure d'interférence (16a-c), comprenant :
- la transmission de signaux micro-ondes dans deux états de polarisation prédéterminés, l'un après l'autre, vers une surface (14) de ladite substance et ladite au moins une structure d'interférence ; et
- individuellement pour chacun des signaux micro-ondes transmis, la détection de signaux micro-ondes (32, 33), temporellement résolus dans un état de polarisation prédéterminé, qui sont réfléchis contre la surface de ladite substance et qui sont réfléchis contre ladite au moins une structure d'interférence, **caractérisé par** les étapes de :
- la répétition desdites étapes de la transmission et de la détection pour obtenir des variations dans le temps des signaux micro-ondes qui sont réfléchis contre la surface de ladite substance et qui sont réfléchis contre ladite au moins une structure d'interférence ;
- la distinction, sur la base de forces de signal des signaux micro-ondes détectés temporellement résolus et sur la base des variations dans le temps des signaux micro-ondes détectés temporellement résolus, du signal micro-ondes détecté (32) qui a été réfléchi contre la surface de ladite substance ; et
- le calcul, sur la base d'un temps de propagation du signal micro-ondes distingué, du niveau de ladite substance dans ledit réservoir.
